# EUROPEAN PATENT APPLICATION

(11) **EP 4 737 760 A1**
(43) Date of publication of application: **06.05.2026**
(21) Application number: 24900413.6
(22) Date of filing: 18.11.2024
(51) Int. Cl.: F16F 15/023, E04H 9/02, G21C 1/00, G21C 13/024

(54) **FLOATING-TYPE BASE ISOLATION SYSTEM**

(30) Priority: 07.12.2023 JP 2023207130
(71) Applicant: IHI Corporation, Tokyo 135-8710 (JP)
(72) Inventor: SHIMADA, Takahiro, Tokyo 135-8710 (JP); MOTEGI, Haruki, Tokyo 135-8710 (JP); OTANI, Akihito, Tokyo 135-8710 (JP)
(74) Representative: Marks & Clerk LLP
(86) International application number: PCT/JP2024/040827
(87) International publication number: WO 2025/121118

(57) **Abstract**

Provided is a floating seismic isolation system (100), including: a storage space (116) in which a liquid for allowing a floating structure (120) to float in the liquid is stored; a first chamber (132), inside which a compressible fluid is accommodated, and which has a volume that is variable according to a pressure fluctuation of the liquid; and a second chamber (134), inside which the compressible fluid is accommodated, and which has a pressure or a volume that passively changes according to a volume change of the first chamber (132).

## Description

### Technical Field

The present disclosure relates to a floating seismic isolation system. This application claims the benefit of priority to Japanese Patent Application No. 2023-207130 filed on December 7, 2023, and contents thereof are incorporated in this application.

### Background

Hitherto, a floating seismic isolation system using a liquid has been developed. As the floating seismic isolation system, for example, in Patent Literature 1, there is disclosed a technology in which a liquid is accommodated in a recess formed in a ground, and a floating structure is caused to float in the liquid.

In the technology of Patent Literature 1, a plurality of air chambers are provided at a bottom of the floating structure, and the air chambers function as a damper that absorbs vertical shaking during an earthquake.

### Citation List

### Patent Literature

Patent Literature 1: JP 2004-1667 A

### Summary

### Technical Problem

However, in Patent Literature 1 above, there is disclosed no mechanism for reducing shaking during an earthquake in a portion other than the floating structure, and hence there is room for further reducing shaking during an earthquake.

In view of such a problem, the present disclosure has an object to provide a floating seismic isolation system that enables reducing shaking during an earthquake by a seismic isolation structure provided in a space accommodating a liquid.

### Solution to Problem

In order to solve the above-mentioned problem, according to one aspect of the present disclosure, there is provided a floating seismic isolation system, including: a storage space in which a liquid for allowing a floating structure to float in the liquid is stored; a first chamber, inside which a compressible fluid is accommodated, and which has a volume that is variable according to a pressure fluctuation of the liquid; and a second chamber, inside which the compressible fluid is accommodated, and which has a pressure or a volume that passively changes according to a volume change of the first chamber.

Moreover, the above-mentioned floating seismic isolation system may include a throttle flow path that allows the first chamber and the second chamber to be in communication with each other.

Moreover, a wall surface having rigidity may be interposed between the compressible fluid in the second chamber and the liquid.

Moreover, the first chamber may include an elastic membrane that is allowed to be in contact with the liquid.

Moreover, the first chamber may include: a cylinder; and a piston, which has a top surface that is allowed to be in contact with the liquid, and which is slidably provided in the cylinder.

Moreover, the above-mentioned floating seismic isolation system may include a wall surface that defines the storage space, and the throttle flow path may be formed at the wall surface.

Moreover, the first chamber may include a plurality of sub-chambers, volumes of the plurality of sub-chambers of the first chamber may be individually variable according to the pressure fluctuation of the liquid, and the throttle flow path may include a plurality of throttle flow paths extending from the plurality of sub-chambers of the first chamber, respectively.

Moreover, the second chamber may include a plurality of sub-chambers, and the plurality of sub-chambers of the second chamber may be in communication with at least one of the plurality of throttle flow paths.

Moreover, the above-mentioned floating seismic isolation system may further include a third chamber that is in communication with the second chamber, and is provided on the ground.

### Advantageous Effects of Invention

According to the present disclosure, it is possible to reduce shaking during an earthquake by the seismic isolation structure provided in the space accommodating the liquid.

### Brief Description of Drawings

FIG. 1 is an explanatory view for illustrating a floating seismic isolation system according to an embodiment of the present disclosure.
FIG. 2 is an explanatory view for illustrating a seismic isolation structure in the embodiment.
FIG. 3 is an explanatory view for illustrating a seismic isolation structure in a first modification example.
FIG. 4 is an explanatory view for illustrating a seismic isolation structure in a second modification example.
FIG. 5 is an explanatory view for illustrating a seismic isolation structure in a third modification example.

### Description of Embodiments

Now, with reference to the attached drawings, embodiments of the present disclosure are described in detail. The dimensions, materials, and other specific numerical values represented in the embodiments are merely examples used for facilitating the understanding of the disclosure, and do not limit the present disclosure unless otherwise particularly noted. Elements having substantially the same functions and configurations herein and in the drawings are denoted by the same reference symbols to omit redundant description thereof. Further, illustration of elements with no direct relationship to the present disclosure is omitted.

### [Floating seismic Isolation System 100]

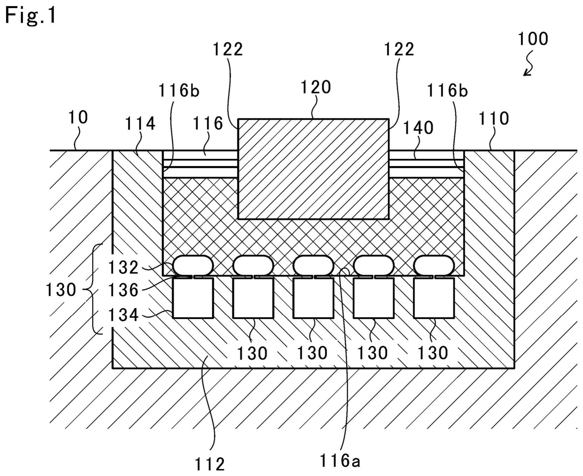

FIG. 1 is an explanatory view for illustrating a floating seismic isolation system 100 according to an embodiment of the present disclosure. As illustrated in FIG. 1, the floating seismic isolation system 100 according to this embodiment includes a liquid storage portion 110, a floating structure 120, a plurality of seismic isolation structures 130, and a mooring portion 140. In the following drawings including FIG. 1, cross-hatching indicates a liquid.

The liquid storage portion 110 is provided in, for example, a recess or a hole formed by digging a ground 10. The liquid storage portion 110 has a bottom wall 112 and a side wall 114. The bottom wall 112 is a wall extending in a horizontal direction or a substantially horizontal direction. The side wall 114 is a wall extending in a vertical direction or a substantially vertical direction. A storage space 116 is defined by the bottom wall 112 and the side wall 114. That is, it can be said that the bottom wall 112 and the side wall 114 are wall surfaces defining the storage space 116. The bottom wall 112 forms a bottom surface 116a of the storage space 116. The side wall 114 forms a side surface 116b of the storage space 116. The liquid is stored in the storage space 116 of the liquid storage portion 110.

The liquid stored in the liquid storage portion 110 is, for example, water. The liquid is not limited to water, and may be any liquid other than water, or may be other liquid including water as main component (for example, sea water).

The floating structure 120 is arranged so as to float in the liquid stored in the storage space 116 of the liquid storage portion 110. The floating structure 120 is arranged apart from the bottom wall 112 and the side wall 114 of the liquid storage portion 110. The floating structure 120 is, for example, a floating nuclear power plant. However, the floating structure 120 is not limited to the floating nuclear power plant, and may be a structure of other plant such as a wind power plant, a wave power plant, and a solar power plant, or may be a structure to which any equipment is mounted. In this embodiment, no air chamber is provided in the floating structure 120, but an air chamber may be provided in the floating structure 120.

The seismic isolation structures 130 absorb and dissipate part of energy of a longitudinal wave (compression wave) due to an earthquake, which has been propagated to the liquid stored in the liquid storage portion 110, to thereby suppress propagation of a wave motion to the floating structure 120. In this embodiment, the floating seismic isolation system 100 includes the plurality of seismic isolation structures 130. A compressible fluid is accommodated inside each of the seismic isolation structures 130. As the compressible fluid to be accommodated in the seismic isolation structure 130, for example, a gas such as air or nitrogen can be used.

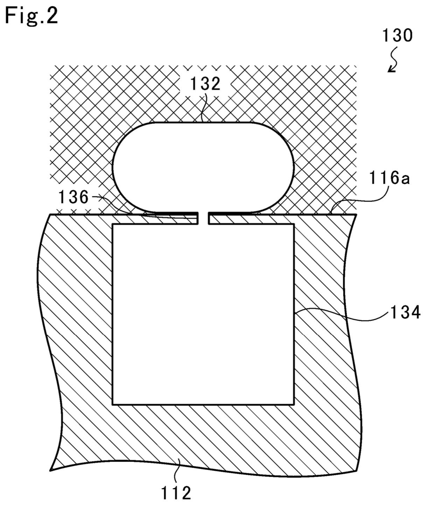

FIG. 2 is an explanatory view for illustrating the seismic isolation structure 130 in this embodiment. As illustrated in FIG. 2, the seismic isolation structure 130 in this embodiment includes one first chamber 132, one second chamber 134, and one throttle flow path 136.

The first chamber 132 is provided in the vicinity of the bottom wall 112 in the storage space 116 of the liquid storage portion 110. In this embodiment, the first chamber 132 is in contact with, for example, the bottom surface 116a of the liquid storage portion 110. The first chamber 132 is provided in the liquid stored in the storage space 116 of the liquid storage portion 110. The compressible fluid is accommodated inside the first chamber 132.

A volume (capacity) of the first chamber 132 is variable according to a pressure fluctuation of the liquid stored in the storage space 116 of the liquid storage portion 110. In this embodiment, at least a part of a portion of the first chamber 132, which is in contact with the liquid, is formed of, for example, a material having stretchability. The material having stretchability is, for example, a material having elasticity. The material having stretchability is, for example, rubber or elastomer. At least a part of the portion of the first chamber 132, which is in contact with the liquid, may be, for example, an elastic membrane. That is, the first chamber 132 is provided with a pressure receiving surface on which the pressure of the liquid stored in the storage space 116 acts. The phrase "a volume (capacity) is variable according to a pressure fluctuation of the liquid" as used herein is not limited to the case in which the pressure receiving surface is provided in the first chamber 132 as in this embodiment. The above-mentioned phrase also includes a case in which, for example, a space in which the compressible fluid is sealed by being sandwiched between two pistons exists between the pressure receiving surface on which the pressure of the liquid acts and the first chamber 132, and the fluctuation of the pressure of the liquid propagates to the first chamber 132 via the sealed space, that is, a case in which the pressure receiving surface is not included in a boundary surface between the first chamber 132 and the liquid, an inclusion exists between the pressure receiving surface and the first chamber 132, and pressure propagation is performed by the inclusion.

In this embodiment, the seismic isolation structure 130 does not include external power or the like that acts in conjunction with the pressure receiving surface to exert work on the first chamber 132.

The second chamber 134 is provided in the bottom wall 112 of the liquid storage portion 110. The compressible fluid is accommodated inside the second chamber 134. That is, it can be said that a wall surface having rigidity is interposed between the compressible fluid in the second chamber 134 and the liquid in the storage space 116. Accordingly, the compressible fluid in the second chamber 134 receives an influence of the pressure of the liquid stored in the storage space 116 via the first chamber 132. In the second chamber 134 of this embodiment, a volume (capacity) hardly changes or does not change due to a pressure change. The pressure of the second chamber 134 changes passively according to a volume change of the first chamber 132.

The throttle flow path 136 allows the first chamber 132 and the second chamber 134 to be in communication with each other. At least a part of the throttle flow path 136 is formed, for example, in the bottom wall 112. That is, it can be said that the throttle flow path 136 is formed at the wall surface (bottom surface 116a) of the bottom wall 112. A flow path sectional area of the throttle flow path 136 is smaller than those of the first chamber 132 and the second chamber 134. In this embodiment, a horizontal sectional area of the throttle flow path 136 is smaller than those of the first chamber 132 and the second chamber 134. The throttle flow path 136 is formed of, for example, an orifice or a thin tube. In this embodiment, the compressible fluid is hermetically sealed in a space including the first chamber 132, the second chamber 134, and a flow path (throttle flow path 136) that allows the first chamber 132 and the second chamber 134 to be in communication with each other.

Returning to FIG. 1 for description, among first chambers 132 of the seismic isolation structures 130, at least one first chamber 132 is provided directly below the floating structure 120.

The mooring portion 140 is a pillar extending in the horizontal direction or the substantially horizontal direction. The mooring portion 140 is, for example, a column or a prism. One end of the mooring portion 140 is fixed to a corresponding one of side surfaces 122 of the floating structure 120. Another end of the mooring portion 140 is fixed to a corresponding one of side surfaces 116b of the side wall 114 of the liquid storage portion 110.

The mooring portion 140 is formed of a material that does not undergo plastic deformation (for example, buckling deformation) even when a load less than a predetermined seismic intensity is applied, and that undergoes plastic deformation when a load equal to or more than the predetermined seismic intensity is applied. The mooring portion 140 may be formed of a material that is compressively broken when the load equal to or more than the predetermined seismic intensity is applied. The predetermined seismic intensity is set according to the floating structure 120 and the equipment mounted thereon.

As described above, the seismic isolation structures 130 of the floating seismic isolation system 100 according to this embodiment are provided not in the floating structure 120 but in the liquid storage portion 110. Accordingly, the floating seismic isolation system 100 according to this embodiment can reduce vibration of the floating structure 120 due to the earthquake regardless of presence or absence of the air chamber of the floating structure 120.

Further, the seismic isolation structures 130 can be installed in the liquid storage portion 110 before installation of the floating structure 120 and before storing the liquid in the liquid storage portion 110. Accordingly, it becomes possible to easily install the seismic isolation structures 130.

Further, as described above, the seismic isolation structure 130 in this embodiment includes the first chamber 132 provided in the liquid stored in the storage space 116 of the liquid storage portion 110. Accordingly, the seismic isolation structure 130 can absorb part of energy of a wave motion due to the earthquake, which has been propagated to the liquid stored in the liquid storage portion 110. Thus, the seismic isolation structure 130 in this embodiment can reduce energy of the wave motion propagated from the liquid to the floating structure 120 and the equipment mounted thereon. As a result, with the seismic isolation structure 130 in this embodiment, it is possible to avoid a situation in which the floating structure 120 and the equipment mounted thereon vibrate significantly due to the earthquake.

Further, as described above, the volume of the first chamber 132 in this embodiment is variable according to the pressure fluctuation of the liquid. Accordingly, when the pressure of the liquid fluctuates due to the wave motion caused by the earthquake, the volume of the first chamber 132 changes, and the compressible fluid moves from the first chamber 132 to the second chamber 134 or from the second chamber 134 to the first chamber 132 through the throttle flow path 136. Then, a pressure loss occurs due to the movement of the compressible fluid through the throttle flow path 136, resulting in that the absorbed energy can be dissipated. That is, a portion that allows movement of the compressible fluid therethrough to enable dissipating energy is provided between the first chamber 132 and the second chamber 134. Accordingly, the seismic isolation structure 130 in this embodiment can further reduce the energy of the wave motion propagated from the liquid stored in the storage space 116 of the liquid storage portion 110 to the floating structure 120, resulting in that vibration of the floating structure 120 and the equipment mounted thereon can be further suppressed.

Further, as described above, the floating seismic isolation system 100 includes the mooring portion 140. Accordingly, when no earthquake occurs, or when an earthquake having a seismic intensity less than the predetermined seismic intensity occurs, it is possible to avoid a situation in which the floating structure 120 moves in the horizontal direction due to wind or the like. Further, as described above, the mooring portion 140 undergoes plastic deformation or is compressively broken when the earthquake having the seismic intensity equal to or more than the predetermined seismic intensity occurs. Thus, when the earthquake having the seismic intensity equal to or more than the predetermined seismic intensity occurs, the propagation of the wave motion from the side wall 114 to the floating structure 120 can be suppressed.

### [First Modification Example]

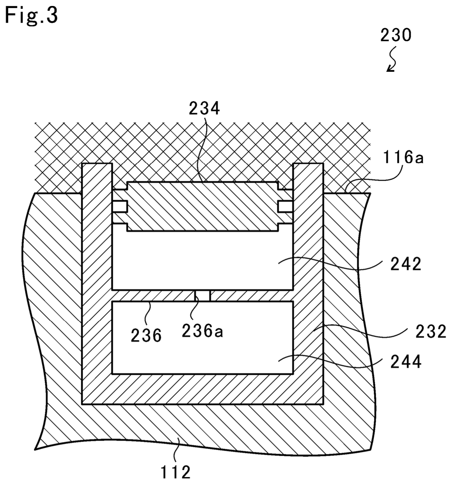

FIG. 3 is an explanatory view for illustrating a seismic isolation structure 230 in a first modification example. As illustrated in FIG. 3, the seismic isolation structure 230 in the first modification example includes a cylinder 232, a piston 234, and an orifice plate 236. Components substantially the same as those of the above-mentioned floating seismic isolation system 100 are denoted by the same reference numerals, and description thereof is omitted.

The cylinder 232 is installed in the bottom wall 112. A central axis of the cylinder 232 is in the vertical direction.

The piston 234 is slidably provided in the cylinder 232. The liquid is accommodated in a space above the piston 234 in the cylinder 232. A top surface (upper surface) of the piston 234 is in contact with the liquid. The compressible fluid (gas) is accommodated in a space below the piston 234 in the cylinder 232.

The orifice plate 236 is provided in the space below the piston 234 in the cylinder 232. The orifice plate 236 vertically divides the space below the piston 234 in the cylinder 232 into two portions.

The space between the orifice plate 236 and the piston 234 in the cylinder 232 functions as a first chamber 242. The space below the orifice plate 236 in the cylinder 232 functions as a second chamber 244.

Further, a hole 236a is formed in the orifice plate 236. The hole 236a functions as a throttle flow path.

As described above, with the seismic isolation structure 230 in the first modification example being provided in the liquid storage portion 110, it becomes possible to simplify the structure of the floating structure 120.

Further, similarly to the seismic isolation structure 130, the seismic isolation structure 230 in the first modification example includes the first chamber 242 provided in the liquid stored in the storage space 116 of the liquid storage portion 110. Accordingly, the seismic isolation structure 230 in the first modification example can absorb part of energy of a wave motion due to the earthquake, which has been propagated to the liquid stored in the liquid storage portion 110. Thus, the seismic isolation structure 230 in the first modification example can reduce energy of the wave motion propagated from the liquid to the floating structure 120 and the equipment mounted thereon. As a result, with the seismic isolation structure 230 in the first modification example, it is possible to avoid a situation in which the floating structure 120 and the equipment mounted thereon vibrate significantly due to the earthquake.

Further, similarly to the first chamber 132 of the seismic isolation structure 130 described above, a volume of the first chamber 242 in the first modification example is variable according to the pressure fluctuation of the liquid. Accordingly, the seismic isolation structure 230 in the first modification example can absorb part of energy of the wave motion due to the earthquake, which has been propagated to the liquid stored in the storage space 116 of the liquid storage portion 110, resulting in that vibration of the floating structure 120 and the equipment mounted thereon can be further suppressed.

### [Second Modification Example]

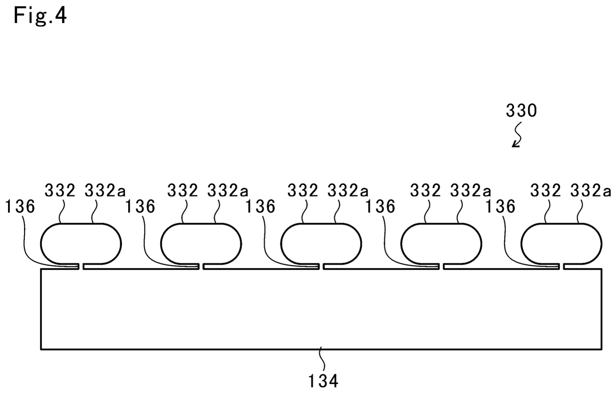

FIG. 4 is an explanatory view for illustrating a seismic isolation structure 330 in a second modification example. As illustrated in FIG. 4, the seismic isolation structure 330 in the second modification example includes a first chamber 332, a plurality of throttle flow paths 136, and one second chamber 134. Components substantially the same as those of the above-mentioned floating seismic isolation system 100 are denoted by the same reference numerals, and description thereof is omitted.

In the second modification example, the first chamber 332 includes a plurality of sub-chambers 332a. Further, volumes of the plurality of sub-chambers 332a are individually variable according to the pressure fluctuation of the liquid stored in the storage space 116. The plurality of throttle flow paths 136 extend from the plurality of sub-chambers 332a, respectively. Further, in the second modification example, the plurality of throttle flow paths 136 are in communication with the second chamber 134. That is, the plurality of throttle flow paths 136 allow the plurality of sub-chambers 332a and one second chamber 134 to be in communication with each other.

As described above, the seismic isolation structure 330 in the second modification example is smaller in the number of the second chamber 134 than the seismic isolation structure 130 described above. Accordingly, the seismic isolation structure 330 in the second modification example allows easy construction of the second chamber 134.

### [Third Modification Example]

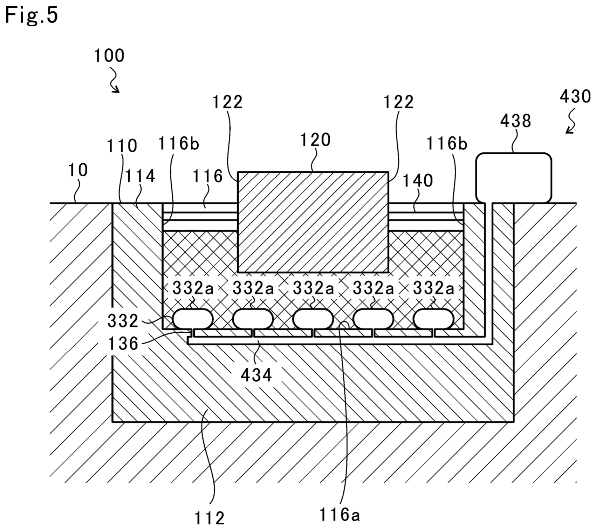

FIG. 5 is an explanatory view for illustrating a seismic isolation structure 430 in a third modification example. As illustrated in FIG. 5, the seismic isolation structure 430 in the third modification example includes the first chamber 332, the plurality of throttle flow paths 136, one second chamber 434, and one third chamber 438. Components substantially the same as those of the floating seismic isolation system 100 and the seismic isolation structure 330 described above are denoted by the same reference numerals, and description thereof is omitted.

In the third modification example, the second chamber 434 allows the plurality of throttle flow paths 136 and the third chamber 438 to be in communication with each other. The second chamber 434 is provided in the bottom wall 112. The second chamber 434 is, for example, a pipe. A flow path sectional area of the second chamber 434 is larger than that of the throttle flow path 136.

The third chamber 438 is provided on the ground. The third chamber 438 is provided, for example, on the ground 10.

The seismic isolation structure 430 in the third modification example has the third chamber 438 provided on the ground. Accordingly, the seismic isolation structure 430 in the third modification example allows easy maintenance of the third chamber 438.

The embodiments have been described above with reference to the attached drawings, but, needless to say, the present disclosure is not limited to the embodiments. It is apparent that those skilled in the art may arrive at various alternations and modifications within the scope of claims, and those examples are construed as naturally falling within the technical scope of the present disclosure.

For example, in the embodiment and the first to third modification examples described above, the case in which the second chamber 134, 244, 434 is provided in the bottom wall 112 of the liquid storage portion 110 has been given as an example. However, the second chamber 134, 244, 434 may be provided in the side wall 114 of the liquid storage portion 110.

Further, in the embodiment and the first to third modification examples described above, the case in which the first chamber 132, 242, 332 is provided in the vicinity of the bottom wall 112 in the storage space 116 of the liquid storage portion 110 has been given as an example. However, the first chamber 132, 242, 332 may be provided in the vicinity of the side wall 114 in addition to the vicinity of the bottom wall 112. Further, the first chamber 132, 242, 332 may be provided in the vicinity of the side wall 114 instead of the vicinity of the bottom wall 112.

Further, in the second modification example described above, the case in which the seismic isolation structure 330 includes the second chamber 134 having one space has been given as an example. However, the seismic isolation structure 330 may include the second chamber 134 including a plurality of sub-chambers. For example, the seismic isolation structure 330 may include: the first chamber 332 having the plurality of sub-chambers 332a; the plurality of throttle flow paths 136 respectively in communication with the plurality of sub-chambers 332a of the first chamber 332; and a plurality of sub-chambers of the second chamber 134, which are fewer than the sub-chambers 332a of the first chamber 332, and with which at least one of the plurality of throttle flow paths 136 is in communication. Accordingly, the seismic isolation structure 330 allows easy construction of the second chamber 134.

Further, in the embodiment and the first to third modification examples described above, the case in which the volume of the second chamber 134, 244, 434 does not change due to the pressure change has been given as an example. However, the volume of the second chamber 134, 244, 434 may change passively according to the volume change of the first chamber 132, 242. In this case, at least a part of the second chamber 134, 244, 434 may be formed of, for example, a material having stretchability. Further, in this case, a pressure outside the second chamber 134, 244, 434 is allowed to fluctuate independently of the pressure of the liquid stored in the storage space 116.

Further, in the embodiment and the first to third modification examples described above, the case in which the seismic isolation structure 130, 230, 330, 430 includes the throttle flow path 136 has been given as an example. However, the throttle flow path 136 may be free of being provided. It is sufficient that the seismic isolation structure in this embodiment includes: a first chamber, inside which a compressible fluid is accommodated, and which has a volume that is variable according to a pressure fluctuation of the liquid stored in the storage space 116; and a second chamber, inside which the compressible fluid is accommodated, and which has a pressure or a volume that passively changes according to a volume change of the first chamber.

Further, in the embodiment described above, the case in which the floating seismic isolation system 100 includes the mooring portion 140 has been given as an example. However, the mooring portion 140 may be free of being provided.

### Reference Signs List

100 floating seismic isolation system, 110 liquid storage portion, 112 bottom wall, 114 side wall, 116 storage space, 120 floating structure, 130 seismic isolation structure, 132 first chamber, 134 second chamber, 136 throttle flow path, 230 seismic isolation structure, 236a hole (throttle flow path), 242 first chamber, 244 second chamber, 330 seismic isolation structure, 332 first chamber, 332a sub-chamber, 430 seismic isolation structure, 434 second chamber, 438 third chamber

## Claims

1. A floating seismic isolation system, comprising:
a storage space in which a liquid for allowing a floating structure to float in the liquid is stored;
a first chamber, inside which a compressible fluid is accommodated, and which has a volume that is variable according to a pressure fluctuation of the liquid; and
a second chamber, inside which the compressible fluid is accommodated, and which has a pressure or a volume that passively changes according to a volume change of the first chamber.

2. The floating seismic isolation system according to claim 1, further comprising a throttle flow path that allows the first chamber and the second chamber to be in communication with each other.

3. The floating seismic isolation system according to claim 1 or 2, wherein a wall surface having rigidity is interposed between the compressible fluid in the second chamber and the liquid.

4. The floating seismic isolation system according to claim 1 or 2, wherein the first chamber includes an elastic membrane that is allowed to be in contact with the liquid.

5. The floating seismic isolation system according to claim 1 or 2, wherein the first chamber includes:
a cylinder; and
a piston, which has a top surface that is allowed to be in contact with the liquid, and which is slidably provided in the cylinder.

6. The floating seismic isolation system according to claim 2, further comprising a wall surface that defines the storage space,
wherein the throttle flow path is formed at the wall surface.

7. The floating seismic isolation system according to claim 2,
wherein the first chamber includes a plurality of sub-chambers,
wherein volumes of the plurality of sub-chambers of the first chamber are individually variable according to the pressure fluctuation of the liquid, and
wherein the throttle flow path comprises a plurality of throttle flow paths extending from the plurality of sub-chambers of the first chamber, respectively.

8. The floating seismic isolation system according to claim 7,
wherein the second chamber includes a plurality of sub-chambers, and
wherein the plurality of sub-chambers of the second chamber are in communication with at least one of the plurality of throttle flow paths.

9. The floating seismic isolation system according to claim 1 or 2, further comprising a third chamber that is in communication with the second chamber, and is provided on the ground.
